# EUROPÄISCHE PATENTSCHRIFT

(11) **EP 1 424 613 B1**
(45) Veröffentlichungstag und Bekanntmachung des Hinweises auf die Patenterteilung: **28.04.2010**
(21) Anmeldenummer: 03026586.2
(22) Anmeldetag: 19.11.2003
(51) Int. Cl.: G05B 19/19, B25J 9/16

(54) **Verfahren und Vorrichtung zum Bearbeiten eines Werkstücks**
method and device for machining a workpiece
Procédé et dispositif d'usinage d'une pièce

(30) Priorität: 26.11.2002 DE 10255037
(43) Veröffentlichungstag der Anmeldung: 02.06.2004
(73) Patentinhaber: KUKA Roboter GmbH, 86165 Augsburg (DE)
(72) Erfinder: Gmeiner, Peter, 86753 Möttingen (DE)
(74) Vertreter: Lempert, Jost

(56) Entgegenhaltungen:
- EP-A- 0 671 246
- EP-A- 0 941 815
- EP-A- 1 038 640
- US-A- 4 694 139
- US-A- 4 891 765
- PAUL, RICHARD P.: "Robot Manipulators" 1981, MIT PRESS , USA * pages 52-53 * * pages 122-123 *

## Beschreibung

Die Erfindung betrifft ein Verfahren und eine Vorrichtung zum Bearbeiten von Werkstücken mittels eines mehrachsigen Handhabungsgeräts, wie eines Industrieroboters, nach den Oberbegriffen der Ansprüche 1 bzw. 17.

Beim Einsatz von Handhabungsgeräten, wie Industrierobotern, zur Bearbeitung von Werkstücken kommen auch Werkzeuge zum Einsatz, die in der Lage sind, Eigenbewegungen mit einer Anzahl von Freiheitsgraden prinzipiell unabhängig von einer Bewegung des Handhabungsgeräts auszuführen. Dies trifft beispielsweise auf Industrieroboter zu, die am distalen Ende ihres Roboterarms einen Laser und eine steuerbare Fokussieroptik zur Laserbearbeitung von Werkstücken tragen. In diesem Fall kann es sich bei dem eingangs genannten Werkzeug beispielsweise um ein Laserschneidwerkzeug, ein Laserschweißwerkzeug oder ein Laserprägewerkzeug handeln, das mit beweglichen Spiegelanordnungen ausgestattet ist, um so eine aktive Arbeitsbewegung des Laserstrahls zu ermöglichen, was der eingangs genannten Eigenbewegung des Werkzeugs gleichkommt.

Die beweglichen Spiegelanordnungen derartiger Laserschneidwerkzeuge werden auch als Scannereinheiten oder Galvoeinheiten bezeichnet.

Die EP 0 941 815 A2 zeigt ein Verfahren und eine Vorrichtung zum Schneiden der Mantelwandung eines zylindrischen Rohres. Der ein Laserwerkzeug tragende Arm des Roboters führt dabei eine Drehbewegung um eine Hauptachse (seine Symmetrieachse) auf, das Werkzeug führt insbesondere entlang, gegebenenfalls aber auch senkrecht zu dieser Achse Bearbeitungsbewegungen auf. Die Bewegungen des Roboters (Drehbewegung) einerseits und die des Werkzeugs andererseits sind - im Zylinderkoordinatensystem - orthogonal zueinander.

Die EP 1 038 640 A2 offenbart eine Vorrichtung und ein Verfahren zum Regeln einer Variablen, und zwar einer Ausgangsleistung eines auf einem Roboterarm angeordneten Werkzeugs.

Die EP 0 671 246 A2 betrifft ein Verfahren mit einem ortsfesten Werkzeug, in welchem das Werkstück von einer von Hand verfahrenen Roboterhand über das ortsfeste Werkzeug geführt wird.

Die US 4, 891 765 offenbart eine Vorrichtung und ein Verfahren zum Bearbeiten von Werkstücken, aufweisend ein mehrachsiges Handhabungsgerät und eine externe Steuerungseinheit zur Bewegungssteuerung des Handhabungsgeräts und eines weiteren Werkzeugs.

Die US 4, 694, 139 offenbart ein Werkzeug mit einer Mehrzahl von Freiheitsgraden zum Ausführen von Eigenbewegungen.

Es ist bei Verfahren bzw. Vorrichtungen der eingangs genannten Art bekannt, Handhabungsgeräte zur Grobpositionierung des Werkzeugs in der Nähe eines zu bearbeitenden Werkstücks einzusetzen, während anschließend das Werkzeug selbst (beim genannten Beispiel also die Spiegel und dadurch bedingt der Laserstrahl) kleinskalige Konturen einer vorbestimmten Bearbeitungsbahn abfahren. Zur Bearbeitung größerskaliger Konturen muss der Bearbeitungsvorgang unterbrochen und das Handhabungsgerät neu positioniert werden. Anschließend übernimmt das an dem Handhabungsgerät angeordnete Werkzeug wieder die kleinskalige Bearbeitung des Werkstücks. Eine solche Arbeitsweise bedingt zeitaufwendige Stop-and-Go-Verfahren, bei denen zeitweise das Handhabungsgerät, zeitweise das Werkzeug stillsteht. Ebenso ergeben sich unnötig große Umorientierungen des (relativ) langsamen Handhabungsgerät.

Die vorbekannten Verfahren und Vorrichtungen zum Bearbeiten von Werkstücken weisen noch eine Reihe weiterer Nachteile auf. So lässt sich in der Regel keine konstante Bearbeitungsgeschwindigkeit auf beliebigen Bearbeitungsgeometrien erreichen, da Bewegungen des Handhabungsgeräts aufgrund dessen größerer Masse und Trägheit immer mit geringerer Geschwindigkeit erfolgen als die kleinskaligen Bewegungen des Werkzeugs, insbesondere in Kurven und Abbiegungen von Konturen. Eine konstante Bearbeitungsgeschwindigkeit stellt jedoch bei Laserverfahren eine Grundvoraussetzung für qualitativ hochwertige Bearbeitung dar.

Aufgrund der Tatsache, dass das Handhabungsgerät und das Werkzeug nach dem Stand der Technik steuerungstechnisch unabhängig voneinander geführt werden, ist außerdem der einer Bearbeitung vorangehende Teaching-Prozess nicht einfach zu handhaben und damit fehleranfällig, da hierzu ggf. zwei Steuerungen umprogrammiert werden müssen. Zudem sind derartige vorbekannte Verfahren und Vorrichtungen nicht online- bzw. echtzeitfähig, da keine Bahnen beliebig geändert werden können, ohne dabei auch die jeweils andere Steuerung mit umprogrammieren zu müssen. Aus dem selben Grund ist außerdem eine Offline-Programmierung nur begrenzt möglich.

Andere vorbekannte Verfahren bzw. Vorrichtungen beschränken sich auf die phasenweise Berücksichtigung einer gleichförmig-geradlinigen Bewegung des Handhabungsgeräts, z.B. eines Fließbands oder eines Portalschweißgeräts, und überlagern dieser Eigenbewegungen des Werkzeugs. Derartige Verfahren und Vorrichtungen stoßen an ihre Grenzen bei der Bearbeitung komplex, beliebig geformter Flächen und Konturen.

Der Erfindung liegt die Aufgabe zugrunde, unter Vermeidung der vorstehend genannten Nachteile ein Verfahren und eine Vorrichtung der eingangs genannten Art hinsichtlich einer optimalen Bewegung des Handhabungsgeräts und des Werkzeugs bei der Bearbeitung von beliebig geformten Werkstücken zu verbessern, wobei sich die zu schaffende Weiterentwicklung einer Vorrichtung der eingangs genannten Art weiterhin durch eine Echtzeit-Anpassbarkeit sowie eine vereinfachte Handhabung, insbesondere bei der Einrichtung von Bearbeitungsvorgängen, auszeichnen soll.

Diese Aufgabe wird durch ein gattungsgemäßes Verfahren mit den kennzeichnenden Merkmalen des Anspruchs 1 und durch eine gattungsgemäße Vorrichtung mit den kennzeichnenden Merkmalen des Anspruchs 17 gelöst.

Erfindungsgemäß kann es sich bei der vorstehend genannten Bearbeitungsgeometrie um eine einfache zusammenhängende Geometrie, d.h. eine Bearbeitungsbahn, handeln. Möglich ist jedoch auch eine Bearbeitung auf einer nur stückweise kontinuierlichen Geometrie, d.h. mit einer sog. Sprungfunktion oder auf einer Mischung beider Geometrien.

Erfindungsgemäß lässt sich so insbesondere bei einer Laserbearbeitung von Werkstücken mit Hilfe eines Scanners die gegebene, wesentlich schnellere Positionierbarkeit des Laserstrahls gegenüber herkömmlichen Laserschweißverfahren dahingehend einsetzen, dass kürzere und bauteiloptimierte Bewegungsbahnen des Handhabungsgeräts möglich werden. In diesem Zusammenhang ergibt sich vor allem bei Vermeidung einer Umorientierung von Achsen des Handhabungsgeräts ein enormer Geschwindigkeitsvorteil. Aufgrund der Echtzeit-Integration der Werkzeugbewegung führen unterschiedliche Bewegungsbahnen des Handhabungsgeräts zu gleichen Bearbeitungsbahnen auf dem Werkstück, so dass sich das erfindungsgemäße Verfahren gegenüber dem Stand der Technik durch eine wesentliche höhere Flexibilität im Einsatz auszeichnet. Darüber hinaus bedingt die kombinierte Auswertung von Bewegungen des Handhabungsgerätes und des Werkzeugs vereinfachte Teach und Bedienvorgänge. Vorzugsweise wird die Auswertung durch die Steuerungseinheit des Handhabungsgeräts vorgenommen.

Im Rahmen der Erfindung werden demgemäß für die Bewegungssteuerung der Werkzeugspitze zumindest Koordinaten einer vorbestimmten Bearbeitungsgeometrie in eine Steuerungseinheit des Handhabungsgeräts eingelesen, beispielsweise durch sogenanntes Teach-in. Eine solche Bearbeitungsgeometrie lässt sich auch offline mittels einer Teach-Einrichtung in einfacher Weise vorgeben.

Nach einer bevorzugten Ausbildung des erfindungsgemäßen Verfahrens ist vorgesehen, dass anschließend die Bearbeitungsgeometrie zu einer Abfolge von diskreten Koordinatenwerten mit einem gleichen zeitlichen Abstand (Taktzeit) zwischen aufeinanderfolgenden Werten diskretisiert wird. Die Taktzeit, der sogenannte IPO-Takt (Interpolationstakt), ist dabei je nach den in der Steuerungseinheit eingesetzten elektronischen Komponenten in einem weiten Bereich frei wählbar, beispielsweise zwischen 100 µs und 12 ms.

In bevorzugter Weise ist vorgesehen, dass die Koordinatenwerte der Bearbeitungsgeometrie vor der Bearbeitung in einer mit der Steuereinheit assoziierten Speichereinheit gespeichert werden. Vorzugsweise werden also die Koordinatenwerte der Bearbeitungsgeometrie jeweils zu den durch den IPO-Takt bestimmten Zeitpunkten in eine Datenbank geschrieben. Diese enthält demnach beispielsweise die Zeitinformation des IPO-Taktes sowie ein in jeder Taktzeit zugeordneten Positions-Sollwert für die vorgegebene Bearbeitungsgeometrie in geeigneten Koordinaten, z.B. kartesischen Koordinaten. Die in der Speichereinheit gespeicherten Werte sind zur Bewegungssteuerung des Handhabungsgeräts und/oder des Werkzeugs durch Interpolation abrufbar.

Die den Koordinaten der Bearbeitungsgeometrie zugeordneten Abweichungswerte in Form von Korrekturwerten entsprechen maximalen Amplituden der Eigenbewegungen des Werkzeugs in dessen Freiheitsgraden. Auf diese Weise wird um die Bearbeitungsgeometrie eine Art "Bewegungsschlauch" definiert, der dem Bereich auf dem Werkstück entspricht, der ausgehend von einer eingenommenen Position auf der Bearbeitungsgeometrie aufgrund einer Eigenbewegung des Werkzeugs von diesem erreicht und bearbeitet werden kann. Das erfindungsgemäße Verfahren beinhaltet, dass eine Bewegungsbahn des Handhabungsgeräts durch die Steuerungseinheit dynamisch dadurch bestimmt wird, dass eine momentane Koordinatendifferenz zwischen der Bearbeitungsgeometrie und einer Position der Werkzeugspitze nicht größer als die maximale Amplitude der entsprechenden Eigenbewegung des Werkzeugs ist. Demnach kann die eigentliche Bewegungsbahn des Handhabungsgeräts derart gewählt werden, dass sie mehr oder weniger beliebig innerhalb des oben definierten Bewegungsschlauches verläuft, so dass die Bewegungsbahn möglichst kurz bzw. bauteilgerecht ausgebildet werden kann. Die Bewegungsbahn kann als vorbestimmte Bewegungsbahn des Handhabungsgeräts vor der Bearbeitung in der mit der Steuerungseinheit assoziierten Speichereinheit gespeichert werden. Erfindungsgemäß ist eine derartige vorgegebene Bewegungsbahn jedoch nicht fest vorgeben, sondern kann im Verlauf der Bearbeitung in Abstimmung mit Eigenbewegungen des Werkzeugs in Echtzeit, d.h. "fliegend" abgeändert werden.

Nach einer Weiterbildung des erfindungsgemäßen Verfahrens ist vorgesehen, dass einzelne Koordinaten der Bewegungsbahn des Handhabungsgeräts und davon abhängig eine Position und Orientierung (Pose) des Werkzeugs zu den Takten der Koordinatenwerte der Bearbeitungsgeometrie bestimmt werden. Auf diese Weise ergeben sich durch die Differenz der im (IPO-)Takt vorgegebenen (gespeicherten) Koordinatenwerte der Bearbeitungsbahn und der im selben (IPO-)Takt bestimmten Bewegungsbahn des Handhabungsgeräts die entsprechenden Bewegungs-Sollwerte für die Freiheitsgrade des Werkzeugs, beispielsweise für die Spiegelbewegungen eines Scannersystems. Diese werden erfindungsgemäß in Echtzeit an das Scannersystem weitergegeben.

Im Rahmen des erfindungsgemäßen Verfahrens kann weiterhin vorgesehen sein, dass die Bewegungen des Handhabungsgeräts und des Werkzeugs zwischen den Takten durch Interpolation bestimmt werden. Die somit grundsätzlich im IPO-Takt bestimmten Koordinatenwerte können mit Hilfe geeignet eingerichteter Berechnungsmittel in ihrer Bestimmungsfrequenz an eine gegebene Konfiguration der Bewegungsbahn bzw. Bearbeitungsgeometrie angepasst werden. Vorzugsweise sieht das erfindungsgemäße Verfahren hierzu vor, dass die Taktzeit zumindest zeitweise an wenigstens einem Parameter der Bewegungen angepasst wird. Bei diesem Parameter kann es sich beispielsweise um eine Bahnkrümmung im Raum handeln, so dass im Zuge einer geradlinigen Bewegung entsprechend weniger Koordinatenwerte bestimmt werden, da eine Bahnplanung durch Extrapolation erfolgen kann.

Nach einer äußerst bevorzugten Weiterbildung des erfindungsgemäßen Verfahrens ist vorgesehen, dass die Bewegung der Werkzeugspitze mit im wesentlichen konstanter Geschwindigkeit erfolgt, so dass eine entscheidende Voraussetzung für den Einsatz des erfindungsgemäßen Verfahrens im Zuge einer hochqualitativen Werkstückbearbeitung, beispielsweise durch Lasereinwirkung, gewährleistet ist.

Eine erfindungsgemäße Vorrichtung zeichnet sich dadurch aus, dass entweder das Werkstück oder das Werkzeug während der Bearbeitung mit dem Handhabungsgerät verbunden und durch dieses bewegbar ist. Somit ist es beim Einsatz der erfindungsgemäßen Vorrichtung möglich, ein zu bearbeitendes Werkstück mittels eines geeignet ausgebildeten Handhabungsgeräts, wie eines Sechsachs-Industrieroboters aufzunehmen und einem separat angeordneten und fixierten Werkzeug zur Bearbeitung zuzuführen, das mit dem Handhabungsgerät nur steuerungstechnisch verbunden ist (externe TCP-Technik). Es kann jedoch auch verfahrensökonomischer sein, das Werkzeug direkt am Handhabungsgerät anzubringen und gemeinsam mit diesem über das Werkstück zu bewegen.

Nach einer bevorzugten Ausgestaltung der erfindungsgemäßen Vorrichtung ist vorgesehen, dass diese eine mit der Steuerungseinheit des Handhabungsgeräts assoziierte Speichereinheit zum Speichern zumindest einer diskretisierten Abfolge von Koordinatentwerten für eine Bearbeitungsgeometrie auf dem Werkstück aufweist, z.B. einen (flüchtigen) Arbeitsspeicher oder einen Permanentspeicher. Zur Weiterverarbeitung einer derartig (auch offline) vorgebbaren Koordinatenabfolge ist vorzugsweise vorgesehen, dass die erfindungsgemäße Vorrichtung eine Bestimmungseinheit zum Bestimmen von Amplituden der Eigenbewegungen des Werkzeugs entsprechenden Abweichungen für die Koordinatenwerte der Bearbeitungsgeometrie aufweist.

Weiterhin weist die erfindungsgemäße Vorrichtung vorzugsweise Bestimmungsmittel zum dynamischen Bestimmen einer relativen Pose zwischen Werkzeugspitze und einer Summe aus den Koordinatenwerten der Bearbeitungsgeometrie und den zugehörigen Abweichungen auf.

Erfindungsgemäß erfolgt die Bewegung der Werkzeugspitze innerhalb des durch die Summe aus den Koordinatenwerten der Bearbeitungsgeometrie und den zugehörigen Abweichungen bestimmten Raumbereichs (Bewegungsschlauch). In diesem Zusammenhang weist die erfindungsgemäße Vorrichtung nach einer äußerst bevorzugten Weiterbildung programmtechnisch eingerichtete Prozessormittel zum zeitlichen und/oder räumlichen Optimieren einer momentanen Bewegung des Handhabungsgeräts unter Ausnutzung der Freiheitsgrade des Werkzeugs auf, da sich die Bewegungen des Werkzeugs aufgrund der dort vorhandenen geringere Masse bzw. der geringeren erforderlichen Bewegungsamplituden in der Regel schneller durchführen lassen, als entsprechende gleichwirkende Bewegungen des Handhabungsgeräts. Es ist damit nicht länger erforderlich, das Handhabungsgerät zu jeder Zeit im wesentlichen auf der geforderten Bearbeitungsgeometrie zu bewegen, vielmehr kann das Bearbeitungsgerät der Bearbeitungsgeometrie vor- oder nacheilen, wodurch sich die Positionierzeiten des Handhabungsgeräts stark reduzieren lassen, was sich positiv auf die Gesamtbearbeitungszeit auswirkt.

Dabei führt das Vor- bzw. Nacheilen des Werkzeugs, beispielsweise der Galvospiegel, vor allem bei Kurven der Bearbeitungsgeometrie zu erheblichen Vorteilen, da auf diese Weise auch enge Bewegungsradien ohne Geschwindigkeitseinbrüche durchfahren werden können.

Weitere Eigenschaften und Vorteile ergeben sich aus den beigefügten Zeichnungen, in denen einige Ausführungsformen der Erfindung exemplarisch dargestellt sind. Es zeigt:
- Fig. 1: ein Ausführungsbeispiel der erfindungsgemäßen Vorrichtung in Form eines Sechsachs-Industrieroboters mit einem am distalen Ende des Roboterarms angeordneten Laser-Bearbeitungswerkzeug;
- Fig. 2: eine schematische Darstellung der Ablenkung eines zur Werkstückbearbeitung eingesetzten Laserstrahls durch die Optik des Scannersystems;
- Fig. 3: eine zusammenhängende Bearbeitungsgeometrie (Bearbeitungsbahn) für ein Werkstück mit überlagerter Bahnbewegung des Handhabungsgeräts;
- Fig. 4: die Bearbeitungsbahn gemäß Fig. 3 mit einer anderen überlagerten Bahnbewegung des Handhabungsgeräts;
- Fig. 5: eine schematische Darstellung einer stückweise zusammenhängenden Bearbeitungsgeometrie (Sprungfunktion) mit einer zugehörigen Bahnbewegung des Handhabungsgeräts; und
- Fig. 6: ein Ablaufdiagramm des erfindungsgemäßen Verfahrens zur Bearbeitung von Werkstücken.

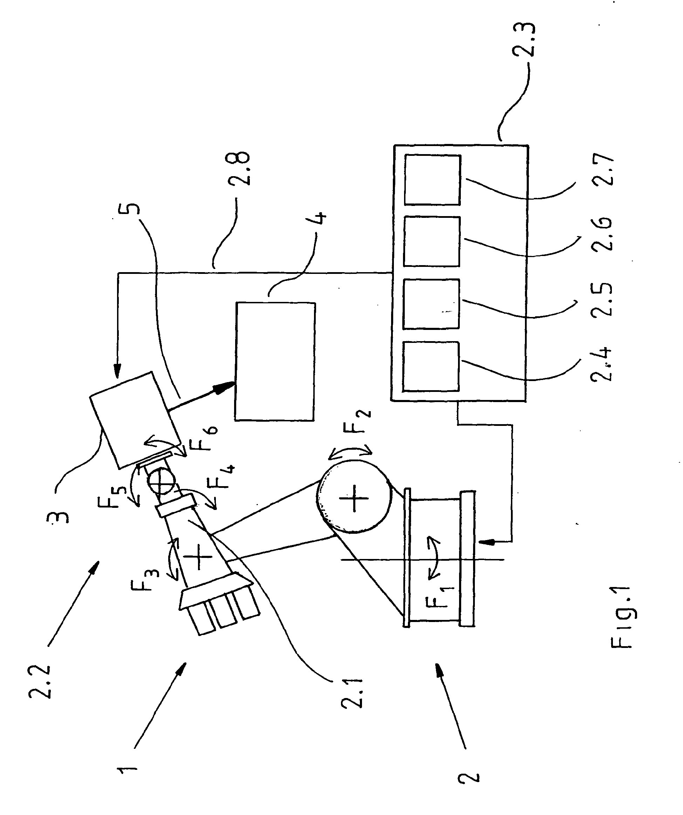

Die Fig. 1 zeigt eine erfindungsgemäße Vorrichtung 1 mit einem Handhabungsgerät 2 in Form eines Sechsachs-Industrieroboters, an dessen Arm 2.1 am distalen Ende 2.2 ein Werkzeug 3 zum Bearbeiten eines Werkstücks 4 angeordnet ist. Der Roboter 2 ist für Bewegungen im Raum mit bis zu sechs Freiheitsgraden F₁ bis F₆ ausgebildet.

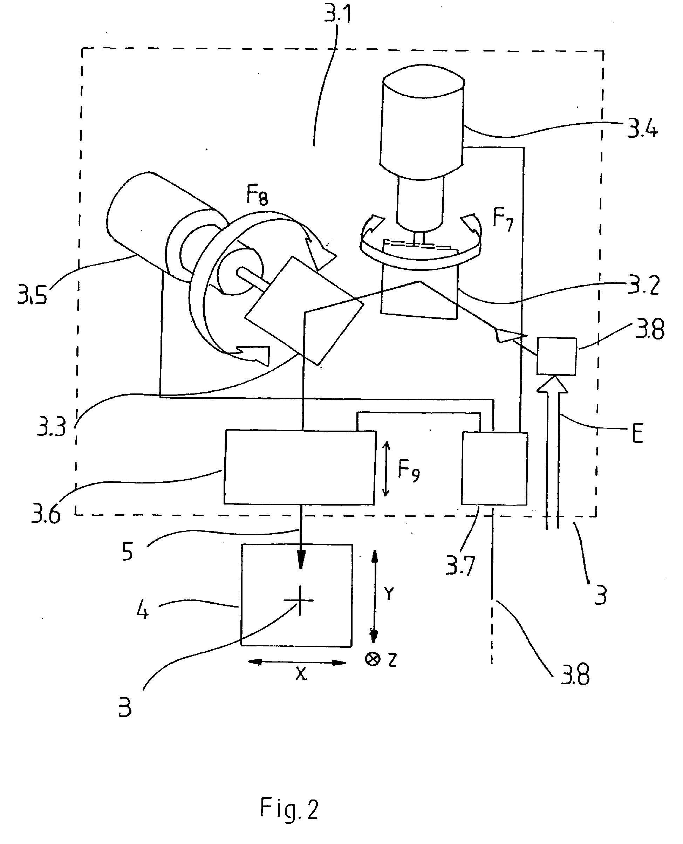

Bei dem Werkzeug 3 handelt es sich beim Ausführungsbeispiel der Fig. 1 um ein Laser-Bearbeitungswerkzeug mit einem integrierten Scannersystem, das weiter unten anhand der Fig. 2 näher dargestellt ist. Die Bearbeitung des Werkstücks 4 erfolgt, wie in Fig. 1 schematisch dargestellt, durch einen Laserstrahl 5, der vom Werkzeug 3 ausgesandt wird bzw. selbst Teil des Werkzeugs ist und auf das Werkstück 4 einwirkt.

Zur Bewegungssteuerung weist die erfindungsgemäße Vorrichtung 1 eine Steuerungseinheit 2.3 auf, deren Steuersignale über ein Übertragungsmedium 2.8, wie Feldbus, Echtzeit-Ethernet oder Firewire an das Werkzeug 3 und/oder den Roboter 2 übertragen werden.

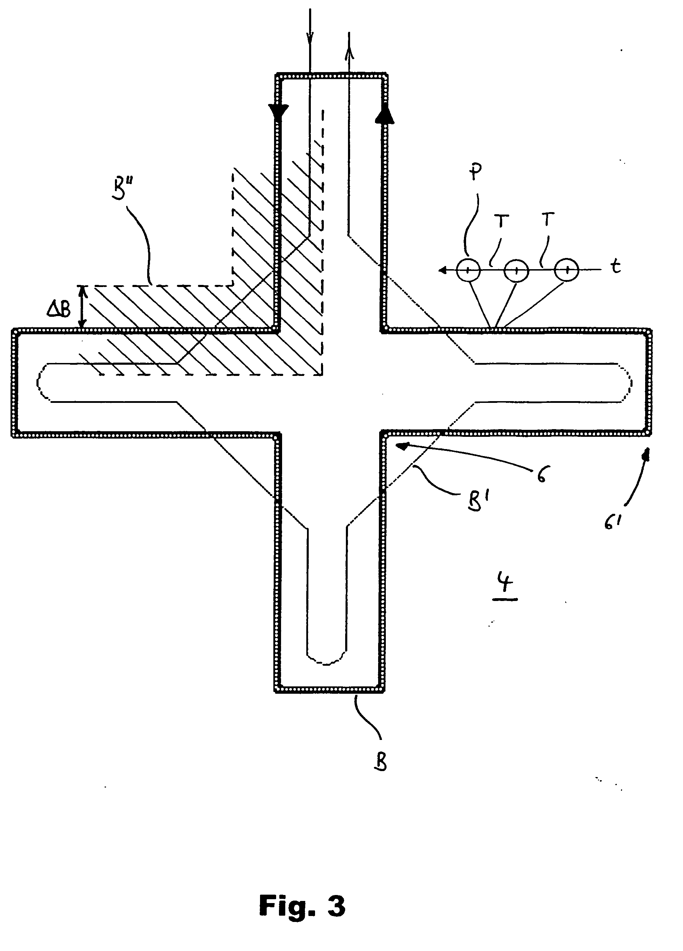

Die Steuerungseinheit 2.3 umfasst weitere Funktionseinheiten, namentlich eine Speichereinheit 2.4, beispielsweise ein Arbeits- oder Permanentspeicher, eine Bestimmungseinheit 2.5, weitere Bestimmungsmittel 2.6 sowie Prozessormittel 2.7, die weiter unten bei einer Beschreibung der Fig. 3 näher erläutert werden.

Bei vorbekannten Vorrichtungen dieser Art ist es üblich, das Werkzeug 3 durch Bewegen des Roboters 2 zumindest grob in der Nähe der zu bearbeitenden Fläche des Werkstücks 4 zu positionieren, um anschließend die zur Bearbeitung des Werkstücks 4 noch erforderlichen (Rest-)Bewegungen durch Eigenbewegungen des Werkzeugs 3 und entsprechende Bewegungen des Laserstrahls 5 auszuführen. Eine Bewegungssteuerung des Roboters 2 und des Werkzeugs 3 erfolgt praktisch unabhängig voneinander, was einen Großteil der eingangs erwähnten Nachteile mit sich bringt.

Die Fig. 2 zeigt schematisch den inneren Aufbau des Werkzeugs 3 der Fig. 1. Es weist zum Ablenken des Laserstrahls 5 ein Scannersystems 3.1 bestehend aus Spiegeln 3.2, 3.3 und zugeordneten Antrieben 3.4, 3.5 auf. Den Spiegeln im Strahlengang nachgeschaltet ist eine Fokussieroptik 3.6. Ferner beinhaltet das Werkzeug 3 eine Steuerungseinheit 3.7, die über das Übertragungsmedium 2.8 Signale der Steuerungseinheit 2.3 (Fig. 1) zum Steuern der Antreibe 3.4, 3.5 und zum Einstellen der Optik 3.6 in Echtzeit empfängt.

Mit Hilfe der drehbaren Spiegel 3.2, 3.3 sowie der Fokussieroptik 3.6 lassen sich auf dem Werkstück 4 in einem bestimmten, durch die maximalen Amplituden der Eigenbewegungen der Spiegel 31, 33 bzw. der Fokusverschiebung der Optik 3.6 vorgegeben Bereich, quasi beliebige Bearbeitungsgeometrien B im Raum abfahren. Die drei Freiheitsgrade der Werkzeugbewegung, im Ausführungsbeispiel in der Fig. 2 der Bewegung des Laserstrahls 5 auf dem Werkstück 4, sind in Fig. 2 mit F₇ bis F₉ bezeichnet. Auf dem Werkstück 4 entsprechen diesen Freiheitsgraden F₇-F₉ in der gewählten Darstellung gemäß Fig. 2 kartesische Verschiebungen in X-, Y- und Z-Richtung, wie im unteren Teil der Fig. 2 in gegenüber dem Rest der Fig. 2 gekippter Darstellung gezeigt ist. Dabei entspricht insbesondere die Z-Richtung dem Fokussier-Freiheitsgrad F₉ des Werkzeugs 3.

Ein Einkoppeln E von Laserenergie erfolgt im Bereich einer Einkopplungseinheit 3.8, die alternativ zu der in Fig. 2 gezeigten Ausführung auch außerhalb des Werkzeugs 3 im Bereich der fünften oder sechsten Roboterachse angeordnet sein kann.

Die Fig. 3 zeigt schematisch eine mittels der erfindungsgemäßen Vorrichtung und des erfindungsgemäßen Verfahrens realisierbare einfach zusammenhängende Bearbeitungsgeometrie, d.h. eine Bewegungsbahn B der Werkzeugspitze (TCP) in Form einer kreuzförmigen Kontur, beispielsweise zur Laserbeschriftung der Oberfläche eines Werkstücks 4. Der Bearbeitungsbahn B überlagert dargestellt ist in Fig. 3 eine Bewegungsbahn B' des Roboters 2 (Fig. 1) bzw. des distalen Endes 2.2 des Roboterarms 2.1, an dem erfindungsgemäß das Werkzeug 3 befestigt sein kann. Die Bewegungsbahn B' des Roboters weist insbesondere in Bereichen 6, 6', in denen sich ein Verlauf der Bearbeitungsbahn B stark ändert, d.h. an Ecken oder Kanten der Bearbeitungsbahn B einen deutlich von der Bearbeitungsgeometrie B abweichenden Verlauf B' auf.

Die Roboterbewegung B' verläuft während der gesamten Bearbeitung innerhalb eines Raumbereichs B'' ("Bewegungsschlauch"; in Fig. 3 schraffiert dargestellt), der die Bearbeitungsbahn B allseitig umgibt, und dessen Abweichung ΔB von der Bearbeitungsbahn B jeweils einer maximalen Bewegungsamplitude des Werkzeugs 3 in einem seiner drei Freiheitsgrade F₇-F₉ entspricht (vergleiche Fig. 2).

Die Punkte P längs der Bearbeitungsbahn B, von denen im oberen Teil der Fig. 3 einige vergrößert dargestellt sind, stellen den Interpolationstakt (IPO-Takt) der Steuerungseinheit 2.3 der erfindungsgemäßen Vorrichtung 1 dar (Fig. 1). Der IPO-Takt besitzt beim Ausführungsbeispiel der Fig. 3 ein Zeitraster T, beispielsweise mit T=2 ms. Die regelmäßige Abfolge von Punkten P längs der Bearbeitungsbahn B gibt an, dass die Bearbeitung des Werkstücks 4 erfindungsgemäß mit konstanter Bearbeitungsgeschwindigkeit stattfindet. Bei vorbekannten Bearbeitungsvorrichtungen bzw. -verfahren entspricht die Bewegungsbahn B' des Handhabungsgeräts 2 im wesentlichen der vorgegebenen Bearbeitungsbahn B. Dies führt insbesondere in Bereichen 6, 6', in denen die Bearbeitungsbahn B abrupt die Richtung wechselt, dazu, dass aufgrund der erforderlichen Umpositionierung der relativ trägen Achsen des Handhabungsgeräts 2 in diesen Bereichen nur mit abgesenkter Bearbeitungsgeschwindigkeit gearbeitet werden kann. Entsprechend rutschen die Punkte P in einer der Fig. 3 entsprechenden Darstellung in diesen Bereichen 6, 6' enger zusammen. Dadurch wird die Bearbeitungszeit t für ein gegebenes Werkstück 4 deutlich verlängert.

Erfindungsgemäß wird insbesondere dieser Nachteil dadurch vermieden, dass aufgrund der kombinierten Echtzeit-Bewegungssteuerung von Handhabungsgerät 2 und Werkzeug 3 der negative Trägheitseffekt der Roboterachsen dadurch ausgeglichen wird, dass diese in ihrer Bewegung B' in bestimmten Bereichen 6, 6' einer vorgegebenen Bearbeitungsbahn B voraus- bzw. nacheilen und dabei ggf. von dieser abweichen, während das Abfahren der Bearbeitungsbahn B in diesen Bereichen 6, 6' durch Eigenbewegungen des Werkzeugs 3 sichergestellt ist, die regelmäßig mit größerer Geschwindigkeit durchführbar sind. Anschaulich gesprochen kürzt das Handhabungsgerät 2 in schwierigen Bereichen der Bearbeitungskontur eine Länge seiner Bahnbewegung B' ab und überlässt das Abfahren der Bearbeitungsbahn B' in diesen Bereichen dem Werkzeug 3 selbst, damit nicht der Bearbeitungsvorgang als ganzer durch die Trägheit des Handhabungsgerät 2 negativ beeinflusst wird.

Die Bearbeitungsbahn B ist in der in Fig. 1 gezeigten Speichereinheit 2.4 der Steuerungseinheit 2.3 der erfindungsgemäßen Vorrichtung 1 in Form von zeitlich um den Wert T beabstandeten Koordinatenwerten gespeichert. Zur Bestimmung des Bewegungsschlauchs B" dient die ebenfalls in Fig. 1 gezeigte Bestimmungseinheit 2.5. Zur zeitlich und/oder räumlich optimierten Bewegungssteuerung des Handhabungsgeräts 2 innerhalb des Bewegungsschlauchs B'' dienen die ebenfalls in Fig. 1 gezeigten Prozessormittel 2.7, die mit den Bestimmungsmitteln 2.6 zusammenwirken, mittels derer durch dynamisches Bestimmen einer relativen Pose (Ort und Ausrichtung) zwischen der Werkzeugspitze der erfindungsgemäßen Vorrichtung und einer Summe aus den Koordinatenwerten der Bearbeitungsbahn B und den zugehörigen Abweichungen ΔB sichergestellt ist, dass die Bearbeitungsbahn B trotz dynamischer Anpassung der Roboterbewegung B' und/oder der Eigenbewegungen X, Y, Z des Werkzeugs 3 jederzeit eingehalten wird.

Zu diesem Zweck übermittelt die Steuerungseinheit 2.3 (Fig. 1) nach erfolgter Optimierung der Bewegungsbahn B' angepasste Steuersignale an die Steuerungseinheit 3.7 des Werkzeugs 3. So können die Eigenbewegung X, Y, Z des Werkzeugs 3 die Bewegungsbahn B' zur Bearbeitungsbahn B "ergänzen".

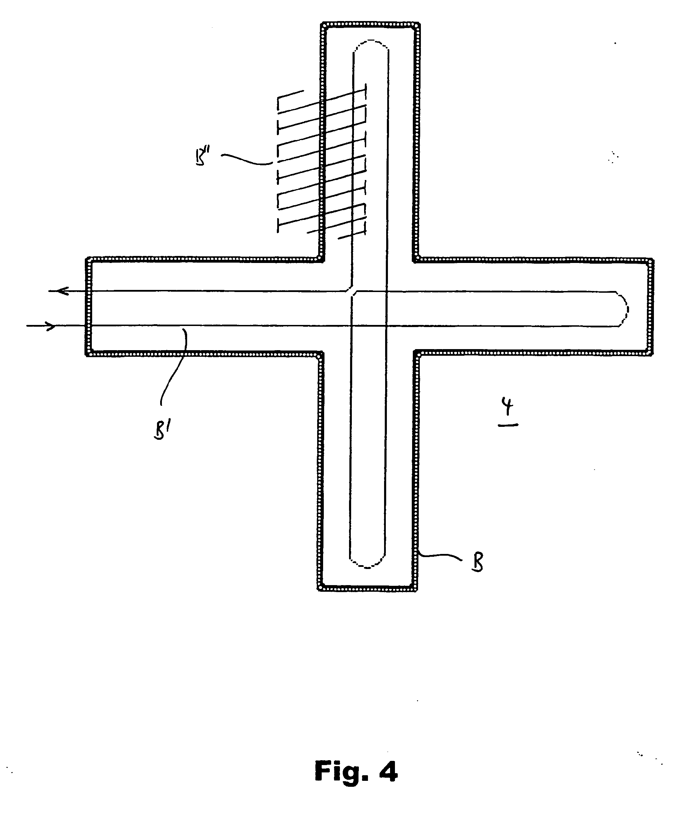

Die Fig. 4 zeigt eine weitere mögliche Bewegungsbahn B' des Handhabungsgeräts 2 zum Abfahren der vorgegebenen, kreuzförmigen Bearbeitungsbahn B der Fig. 3. Beim Ausführungsbeispiel der Fig. 4 wird ausschließlich der innerhalb der Kontur der Bearbeitungsbahn B liegende Bereich des Bearbeitungsschlauchs B'' ausgenutzt. Eine derartige Bewegungsführung des Handhabungsgeräts 2 ist insbesondere dann von Vorteil, wenn weitläufigere Roboterbewegungen B' aufgrund äußerer Hindernisse nicht realisierbar sind oder in anderer Weise eine besonders bauteiloptimierte Bewegungsbahn B' erforderlich oder angestrebt ist.

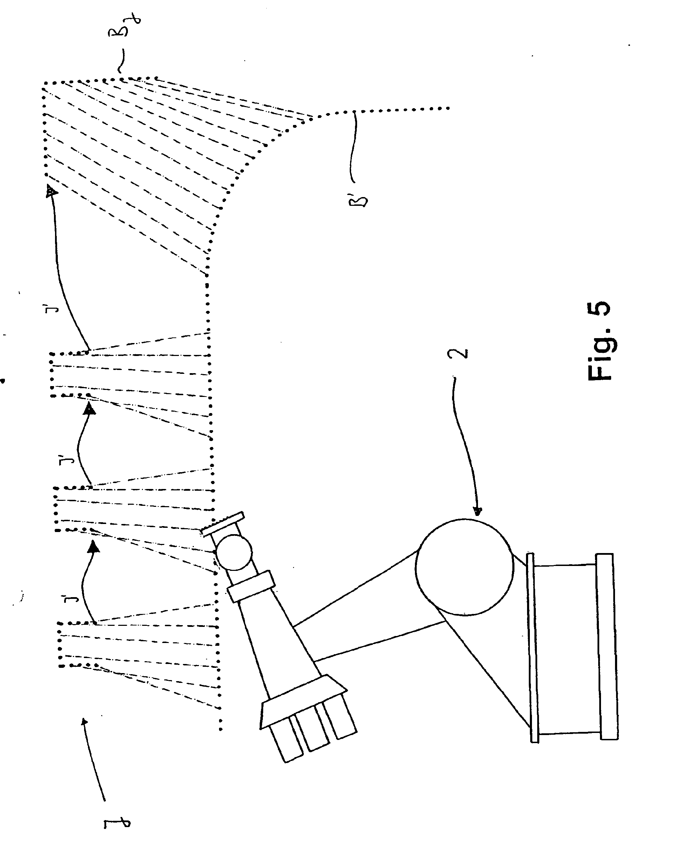

Die Fig. 5 zeigt schematisch den Einsatz des erfindungsgemäßen Verfahrens bzw. einer erfindungsgemäßen Vorrichtung bei einer Werkstückbearbeitung, bei der die Werkzeugspitze keine einfach zusammenhängende Bahn auf dem Werkstück abfährt; vielmehr ergibt sich die Bearbeitungsgeometrie J der Fig. 5 als Abfolge stückweise zusammenhängender Geometrieteilstücke B_{J}, B_{J}' im Rahmen einer sogenannten Sprungfunktion. Zwischen den zusammenhängenden Teilstücken B_{J} führt die Werkzeugspitze eine Sprungbewegung J' durch, die mit 100 bis 1000-fach höherer Geschwindigkeit als die Bearbeitungsbewegung während der Bewegung auf den Teilstücken B_{J}, B_{J}' erfolgt, so dass keine Prozesszeit verloren geht. Bei Sprungfunktionen können beliebige Bearbeitungsgeometrien (auch in drei Dimensionen) mit einer Roboterbewegung aus der zuletzt abgearbeiteten Bahnfunktion (Bearbeitungsmodus mit einfach zusammenhängender Bahn) angesprungen werden. Da die Sprünge eine geringe zeitliche Dauer besitzen (wenige µs), ist es möglich, die Laserleistung während der Sprünge nicht vollständig wegzuschalten, sondern lediglich durch sogenannte Rampen herunterzusetzen. Da die Sprünge mit höherer Geschwindigkeit erfolgen als die Bearbeitungsbewegungen (s.o.), sind dann auf den Werkstücken keine Laserspuren zu sehen. Die Geometrien können sich von Sprung zu Sprung unterscheiden, so dass auch Schriften oder Graphiken erzeugt werden können. Ein weiteres Beispiel für die Anwendung von Sprungfunktionen ist eine Abfolge isolierter, d.h. räumlich voneinander getrennter Schweißpunkte.

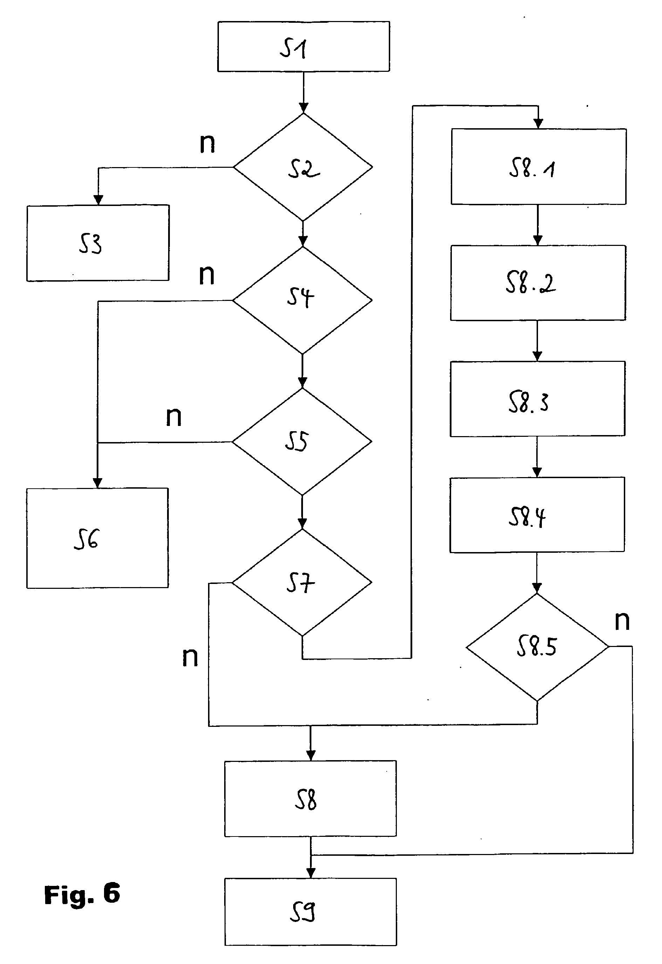

Die Fig. 6 zeigt anhand eines Ablaufdiagramms den Ablauf eines erfindungsgemäßen Bearbeitungsverfahrens mittels eines mit einem Laser-Bearbeitungswerkzeug 3 ausgestatteten Industrieroboters 2. Das in Fig. 6 dargestellte Steuerungsverfahren läuft erfindungsgemäß in der Steuerungseinheit 2.3 des in Fig. 1 dargestellten Handhabungsgeräts 2 ab.

Ausgangspunkt des Verfahrens ist in Schritt S1 eine Ermittlung des Robotertyps (Achsenzahl) ggf. des zur Bewegungssteuerung eingesetzten Koordinatensystems (z.B. kartesisch). Anschließend erfolgt in Schritt S2 die Abfrage, ob das eingesetzte Laser-Bearbeitungswerkzeug 3 drei unabhängige Freiheitsgrade der Bewegung, hier speziell zwei Spiegelachsen F₇, F₈ und eine Fokusachse F₉, aufweist. Wird die Abfrage S2 verneint (n), so erfolgt die Bewegung der Werkzeugachsen nach dem Stand der Technik wahlweise synchron oder asynchron zur Roboterbewegung S3. Anderenfalls erfolgt in Schritt S4 die Abfrage, ob eine synchrone Werkzeugsteuerung (Spiegel-Fokus-Steuerung) durch die Steuerungseinheit 2.3 des Roboters 2 übernommen werden soll. In diesem Fall erfolgt in Schritt S5 die Abfrage, ob zwischen Roboter und Werkzeug eine Bewegungskoordination stattfinden soll.

Unter einer synchronen Werkzeugsteuerung gemäß Schritt S4 ist eine übergeordnete Bahnplanung zu verstehen, die dem Roboter und den Spiegeln synchron die anzufahrenden Positionen mitteilt. Dies geschieht beispielsweise im IPO-Takt durch einen externen Rechner in Schritt S6 (s.u.), der den Takt für beide Bewegungssteuerungen (Roboter und Werkzeug) synchron angibt.

Bei der Bewegungskoordination gemäß Schritt S5 setzt sich das Positionssystem der Spiegelsteuerung auf das dreidimensionale Tooldatensystem (TCP-Koordination) des Roboters auf.

Wird eine der beiden Abfragen S4, S5 verneint, so erfolgt in Schritt S6 eine Koordination und Bewegungsführung der Achsen durch eine externe Steuerungseinheit (nicht dargestellt).

Werden beide Abfragen S4, S5 bejaht, so erfolgt in Schritt S7 eine weitere Abfrage dahingehend, ob die vorgegebene Bearbeitungsbahn B identisch einer Einwirkungsbahn, hier einer Laserbahn, ist. Bei Bahnfunktionen, d.h. Bearbeitungsmodi mit zusammenhängender Bearbeitungsgeometrie, liegt die Bearbeitungsbahn in der Regel außerhalb der Roboterbahn, um Geschwindigkeitsvorteile der Spiegel zu nutzen. Es ist jedoch auch ein Bearbeitungsmodus möglich, bei dem sich die Bearbeitungsgeometrie quasi auf der Roboterbahn befindet und nur Ecken oder enge Radien der Kontur in einem "Überschleifmodus" der TCP-Bewegung bearbeitet werden. Dabei fährt der Roboter längs einer Bewegungsbahn, die z.B. Ecken der Bearbeitungskontur "abschneidet", ähnlich wie in Fig. 3 bei Bezugszeichen 6 dargestellt, wobei die Roboterbahn auch eine bogenförmige im Raum ("Überschleifkugel") sein kann. Die Spiegel fahren als Bearbeitungsbahn den vorgesehenen (geteachten) Umkehrpunkt, d.h. den Eckpunkt an. Dabei kann sich, was die Bearbeitungskontur anbelangt, eine Ecke in diesem Punkt ergeben, die abhängig von den zuvor und danach gegebenen Punkten frei im (dreidimensionalen) Raum liegt. Wird die Abfrage S7 verneint, so ist es in Schritt S8 möglich, im Rahmen sogenannter Sprungfunktionen einzelne definierte Abweichungen von einer Bearbeitungsbahn zuzulassen (Fig. 5). In diesem Fall beginnt mit Schritt S9 direkt anschließend die koordinierte Bewegung von Werkzeug (Scanner) 3 und Handhabungsgerät 2.

Für den Fall, dass in Schritt S7 eine Identität von Bearbeitungsbahnen B und Laserbahn bejaht wurde, schließen sich an Schritt S7 anstelle des vorstehend beschriebenen Schrittes S8 nacheinander die folgenden Verfahrensschritte S8.1 bis S8.4 an: Zunächst werden in Schritt S8.1 die Bearbeitungsbahn B (und die Laserbahn) in diskrete Punktfolgen von Koordinatenwerten auf der Grundlage eines Zeitrasters nach Maßgabe durch die erreichbaren IPO-Takte des Handhabungsgeräts 2 bzw. dessen Steuerungseinheit 2.3 zerlegt. Das heißt konkret, dass die Koordinatenwerte von jeweils in einem zeitlichen Abstand T (Fig. 3) nacheinander einzunehmenden Positionen bestimmt und in einer Speichereinheit 2.4 der Steuerungseinheit 2.3 abgelegt werden, beispielsweise in Form einer Datenbank. Anschließend wird in Schritt S8.2 für jeden IPO-Takt eine Bahndifferenz zwischen der vorgegebenen Bearbeitungsbahn B und einer geteachten Roboterbahn bestimmt, deren Koordinatenwerte ebenfalls in der Speichereinheit 2.4 der Steuerungseinheit 2.3 gespeichert sein können. In Schritt S8.3 wird für die vorgegebenen Bearbeitungsbahn B in der Bestimmungseinheit 2.5 (Fig. 1) der vorstehend anhand der Fig. 3 beschriebene Bewegungsschlauch B'' berechnet.

Die Bahndifferenzen werden anschließend in Schritt S8.4 durch die Bestimmungsmittel 2.6 mit den maximal zulässigen Abweichungen ΔB von der Bearbeitungsbahn B verglichen, woraufhin die geteachte Bahnbewegung des Handhabungsgeräts und davon abhängig die Eigenbewegungen des Werkzeugs, d.h. die Spiegelstellungen und der Laserfokus ggf. derart angepasst werden, dass die Bewegungsbahn B' des Roboters innerhalb des in Fig. 3 definierten Bewegungsschlauches B'' liegt.

In Schritt S8.4 sorgt weiterhin eine Minimierungsautomatik für die IPO-Punkte P (Fig. 3, 4) dafür, dass in Abschnitten der Bewegungsbahn B, in denen sich eine Bearbeitungsgeschwindigkeit bzw. eine Richtung der Bearbeitungsbahn B nicht oder nur unwesentlich verändert, mit einer möglichst geringen Anzahl von IPO-Punkten (Koordinatenwerten) und entsprechend längeren IPO-Takten gearbeitet wird. Es ist auf diese Weise möglich, in derartigen Bereichen das Handhabungsgerät 2 mit extrapolierten Koordinatenwerten schneller zu bewegen.

Die Technik der Minimierungsautomatik bezieht sich auf die Reduzierung der IPO-Punkte auf der Roboterbahn. Beispielsweise benötigt man für eine geradlinige Bewegung des TCP nur zwei Stützpunkte. Bei engen Kurven mit hoher Geschwindigkeit sind z.B. bei hoher geforderter Genauigkeit eine Vielzahl von Bahnstützpunkten im IPO-Takt erforderlich. Wird die Bahnbeschwindigkeit oder die zu erreichende Bahngenauigkeit gesenkt, so reichen eventuell weniger Bahnstützpunkte auf der Roboterbahn aus. Die Minimierungsautomatik richtet sich nach der gewünschten Genauigkeit des Systems und wählt offline die maximal notwendigen Bahnstützpunkte auf der Roboterbahn aus. Die Spiegel selbst werden jedoch in einem Vielfachen des IPO-Taktes angefahren.

An Schritt S8.4 anschließend erfolgt in Schritt S8.5 eine Abfrage, ob zusätzliche Bearbeitungsgeometrien abseits der eigentlichen Bearbeitungsbahn B angefahren werden sollen. Darunter ist folgendes zu verstehen: Fährt eine erfindungsgemäße Vorrichtung Bahnfunktionen, wie längere Nähte (auch abseits der Roboterbahn), so kann als nächster Bearbeitungsmodus auch eine Sprungfunktion folgen, danach wieder eine längere Naht (also eine Bahn) usw. Türecken werden beispielsweise als Naht geschweißt; danach folgen fünf klammerartige Kanten, die Schweißpunkte ersetzen. Auf dieser Weise können Bahnfunktionen und verschiedene Geometrien gemischt werden, z.B. Linien, Kreise, Klammern, Buchstaben, ASCII-Zeichen und die daraus erzeugbaren zwei- und dreidimensionalen Geometrien. Wird dies Abfrage bejaht, so werden die bereits vorstehend erläuterten Schritte S8 und S9 ausgeführt, anderenfalls beginnt direkt an S8.4 bzw. S8.5 anschließend die koordinierte Bewegung von Werkzeug 3 und Roboter 2 in Schritt S9.

### Bezugszeichenliste

- 1: Vorrichtung zum Bearbeiten von Werkstücken
- 2: Handhabungsgerät/Roboter
- 2.1: Roboterarm
- 2.2: distales Ende (von 2.1)
- 2.3: Steuerungseinheit
- 2.4: Speichereinheit
- 2.5: Bestimmungseinheit
- 2.6: Bestimmungsmittel
- 2.7: Prozessormittel
- 2.8: Übertragungsmedium
- 3: Werkzeug/Laser-Bearbeitungswerkzeug
- 3.1: Scannersystem
- 3.2, 3.3: Ablenkspiegel
- 3.4, 3.5: Antrieb
- 3.6: Fokussieroptik
- 3.7: Steuerungseinheit
- 3.8: Einkopplungselement
- 4: Werkstück
- 5: Laserstrahl
- 6, 6': Abschnitt (von B)
- B: Bearbeitungsbahn
- B': Bewegungsbahn
- B'': Bewegungsschlauch
- ΔB: Abweichung
- B_{J}, B_{J}': zusammenhängende Teilstücke
- E: Einkopplung (des Laserstrahls 5)
- F₁-F₉: Freiheitsgrad
- J: Bearbeitungsgeometrie (Sprungfunktion)
- P: IPO-Punkt
- S1-S9: Verfahrensschritte
- t: Bearbeitungszeit
- T: IPO-Taktzeit
- X, Y, Z: kartesische Koordinate

## Patentansprüche

1. Verfahren zum Bearbeiten von Werkstücken (4) mittels eines mehrachsigen Handhabungsgeräts (2), wie eines Industrieroboters, mit einem nach Maßgabe durch eine Steuerungseinheit (2.3) des Handhabungsgeräts (2) bewegten Werkzeug (3), das Eigenbewegungen mit mehreren Freiheitsgraden (F₇-F₉) ausführen kann, **dadurch gekennzeichnet,**
- **dass** ein Bewegungsschlauch ermittelt wird, der durch Abweichungswerte von einer vorbestimmten Bearbeitungsgeometrie bestimmt ist, die nicht größer als die maximalen Amplituden der entsprechenden Eigenbewegung des Werkzeugs sind,
- **dass** die Bewegungsbahn des Handhabungsgeräts innerhalb des Bewegungsschlauches um die Bearbeitungsgeometrie geführt wird,
- **dass** Bewegungs-Sollwerte für die Freiheitsgrade des Werkzeugs durch die Differenz von Koordinaten der Bewegungsbahn des Handhabungsgeräts und Koordinaten der vorgegebenen Bearbeitungsgeometrie bestimmt werden,
- **dass** die Koordinaten des Werkzeugs (3) in dessen Freiheitsgraden (F₇-F₉) gemeinsam mit Koordinaten von Achsen des Handhabungsgeräts (2) in dessen Freiheitsgraden (F₁-F₆) in Echtzeit zum Bewegen einer Werkzeugspitze gemäß der vorbestimmten Bearbeitungsgeometrie (J) und zur Bestimmung einer Bewegung des Handhabungsgeräts (2) ausgewertet werden, und
- **dass** Bearbeitungspositionen auf dem Werkstück (4) durch mit der Bewegung des Handhabungsgeräts (2) synchrone Eigenbewegungen des Werkzeugs (3) erreicht werden.

2. Verfahren nach Anspruch 1, **dadurch gekennzeichnet, dass** die Werkzeugspitze zumindest zeitweise entlang einer einfach zusammenhängenden Bearbeitungsgeometrie bewegt wird.

3. Verfahren nach Anspruch 1 oder 2, **dadurch gekennzeichnet, dass** die Werkzeugspitze zumindest zeitweise entlang einer stückweise zusammenhängenden Bearbeitungsgeometrie bewegt wird.

4. Verfahren nach einem der Ansprüche 1 bis 3, **dadurch gekennzeichnet, dass** die Auswertung durch die Steuerungseinheit des Handhabungsgeräts vorgenommen wird.

5. Verfahren nach einem der Ansprüche 1 bis 4, **dadurch gekennzeichnet, dass** die Bearbeitungsgeometrie zu einer Abfolge von diskreten Koordinatenwerten mit einem gleichen zeitlichen Abstand zwischen aufeinanderfolgenden Werten diskretisiert wird.

6. Verfahren nach Anspruch 5, **dadurch gekennzeichnet, dass** die Koordinatenwerte der Bearbeitungsgeometrie vor der Bearbeitung in einer mit der Steuerungseinheit assoziierten Speichereinheit gespeichert werden.

7. Verfahren nach einem der Ansprüche 1 bis 6, **dadurch gekennzeichnet, dass** die Bewegungsbahn des Handhabungsgeräts möglichst kurz und/oder bauteilgerecht angepasst wird.

8. Verfahren nach einem der Ansprüche 1 bis 7, **dadurch gekennzeichnet, dass** die einzelnen Koordinaten der Bewegungsbahn des Handhabungsgeräts und davon abhängig eine Pose des Werkzeugs zu den Takten der Koordinatenwerte der Bearbeitungsgeometrie bestimmt werden.

9. Verfahren nach einem der Ansprüche 5 bis 8, **dadurch gekennzeichnet, dass** die Bewegungen des Handhabungsgeräts und des Werkzeugs zwischen den Takten durch Interpolation bestimmt werden.

10. Verfahren nach einem der Ansprüche 5 bis 9, **dadurch gekennzeichnet, dass** die Taktzeit zumindest zeitweise an wenigstens einen Parameter der Bewegungen angepasst wird.

11. Verfahren nach einem der Ansprüche 1 bis 10, **dadurch gekennzeichnet, dass** die Bewegung der Werkzeugspitze mit im Wesentlichen konstanter Geschwindigkeit erfolgt.

12. Verfahren nach einem der Ansprüche 1 bis 11, **dadurch gekennzeichnet, dass** eine vorbestimmte Bewegungsbahn des Handhabungsgeräts vor der Bearbeitung in der mit der Steuerungseinheit assoziierten Speichereinheit gespeichert wird.

13. Verfahren nach einem der Ansprüche 1 bis 12, **dadurch gekennzeichnet, dass** das Werkstück während der Bearbeitung durch das Handhabungsgerät bewegt wird.

14. Verfahren nach einem der Ansprüche 1 bis 13, **dadurch gekennzeichnet, dass** das Werkzeug während der Bearbeitung durch das Handhabungsgerät bewegt wird.

15. Verfahren nach einem der Ansprüche 1 bis 14, **dadurch gekennzeichnet, dass** eine Steuerungseinheit (3.7) des Werkzeugs Signale der Steuerungseinheit (2.3) des Handhabungsgeräts (2) über ein Übertragungsmedium (2.8) in Echtzeit empfängt.

16. Verfahren nach Anspruch 9, **dadurch gekennzeichnet, dass** das Werkzeug ein Laserbearbeitungswerkzeug ist und dass Spiegel (3.2, 3.3) des Laserbearbeitungswerkzeugs zur Steuerung in einem Vielfachen des Interpolationstakts angefahren werden.

17. Vorrichtung zum Bearbeiten von Werkstücken (4), aufweisend ein mehrachsiges Handhabungsgerät (2) mit einer Steuerungseinheit (2.3) zur Bewegungssteuerung und einem Werkzeug (3), das zum Ausführen von Eigenbewegungen eine Mehrzahl von Freiheitsgraden (F₇-F₉) aufweist, wobei das Werkzeug (3) und seine Werkzeugspitze (TCP) bei der Bearbeitung eines Werkstücks (4) in ihren Bewegungen (X, Y, Z) durch die Steuerungseinheit (2.3) des Handhabungsgeräts (2) steuerbar sind, **dadurch gekennzeichnet,**
- **dass** ein Bewegungsschlauch ermittelbar ist, der durch Abweichungswerte von einer vorbestimmten Bearbeitungsgeometrie bestimmt ist, die nicht größer als die maximalen Amplituden der entsprechenden Eigenbewegung des Werkzeugs sind,
- **dass** die Bewegungsbahn des Handhabungsgeräts innerhalb des Bewegungsschlauches um die Bearbeitungsgeometrie führbar ist,
- **dass** Bewegungs-Sollwerte für die Freiheitsgrade des Werkzeugs durch die Differenz von Koordinaten der Bewegungsbahn des Handhabungsgeräts und Koordinaten der vorgegebenen Bearbeitungsgeometrie bestimmbar sind, und
- **dass** Bearbeitungspositionen auf dem Werkzeug (4) durch mit der Bewegung des Handhabungsgeräts (2) synchronisierte Eigenbewegungen des Werkzeugs (3) erreichbar sind.

18. Vorrichtung nach Anspruch 17, **dadurch gekennzeichnet, dass** das Werkstück (4) während der Bearbeitung mit dem Handhabungsgerät (2) verbunden und durch dieses bewegbar ist.

19. Vorrichtung nach Anspruch 17, **dadurch gekennzeichnet, dass** das Werkzeug (3) während der Bearbeitung mit dem Handhabungsgerät (2) verbunden und durch dieses bewegbar ist.

20. Vorrichtung nach einem der Ansprüche 17 bis 19, **gekennzeichnet durch** eine mit der Steuerungseinheit (2.3) des Handhabungsgeräts (2) assoziierte Speichereinheit (2.4) zum Speichern zumindest einer diskretisierten Abfolge von Koordinatenwerten für eine Bearbeitungsgeometrie (B) des Werkstücks (4).

21. Vorrichtung nach Anspruch 20, **gekennzeichnet durch** eine Bestimmungseinheit (2.5) zum Bestimmen von Amplituden der Eigenbewegungen (X, Y, Z) des Werkzeugs (3) entsprechenden Abweichungen (ΔB) für die Koordinatenwerte der Bearbeitungsgeometrie (B).

22. Vorrichtung nach Anspruch 21, **dadurch gekennzeichnet, dass** in Bestimmungsmitteln (2.6) zum dynamischen Bestimmen einer relativen Pose zwischen Werkzeugspitze und einer Summe aus den Koordinatenwerten der Bearbeitungsgeometrie (B) und den zugehörigen Abweichungen (ΔB)erzeugte Signale zwecks koordinierter Bewegungssteuerung an das Handhabungsgerät (2) und das Werkzeug (3) weiterleitbar sind.

23. Vorrichtung nach einem der Ansprüche 17 bis 22, **gekennzeichnet durch** programmtechnisch eingerichtete Prozessormittel (2.7) zum zeitlichen und/oder räumlichen Optimieren einer momentanen Bewegung (B') des Handhabungsgeräts (2) unter Ausnutzung der Freiheitsgerade (X, Y, Z) des Werkzeugs (3).

24. Vorrichtung nach einem der Ansprüche 17 bis 23, **dadurch gekennzeichnet, dass** das Werkzeug (3) eine Steuerungseinheit (3.7) beinhaltet, welche dazu ausgelegt ist, die Signale der Steuerungseinheit (2.3) des Handhabungsgeräts (2) über ein Übertragungsmedium (2.8) in Echtzeit zu empfangen.

25. Vorrichtung nach einem der Ansprüche 17 bis 24**, dadurch gekennzeichnet, dass** die Eigenbewegungen des Werkzeugs (3) mit größerer Geschwindigkeit durchführbar sind als die Bewegungen der Achsen des Handhabungsgeräts (2).

## Claims

1. A method of machining workpieces (4) using
a multiaxial manipulator (2), such as an industrial robot, with a tool (3) moved as required by a control unit (2.3) of the manipulator (2), which tool may effect self-movements with a plurality of degrees of freedom (F₇-F₉), **characterised in that**,
- a movement envelope is established which is determined by deviation values from a predetermined machining geometry, these being no greater than the maximum amplitudes of the corresponding self-movement of the tool,
- the movement path of the manipulator is guided about the machining geometry within the movement envelope,
- desired movement values for the degrees of freedom of the tool are determined by the difference between coordinates of the movement path of the manipulator and coordinates of the predetermined machining geometry,
- the coordinates of the tool (3) in the degrees of freedom thereof (F₇-F₉) together with coordinates of axes of the manipulator (2) in the degrees of freedom thereof (F₁-F₆) are evaluated in real time in order to move a tool tip according to the predetermined machining geometry (J) and to determine a movement of the manipulator (2), and
- machining positions are achieved on the workpiece (4) by self-movements of the tool (3) synchronous with the movement of the manipulator (2).

2. A method according to claim 1, **characterised in that** the tool tip is moved at least at times in accordance with a single continuous machining geometry.

3. A method according to claim 1 or claim 2, **characterised in that** the tool tip is moved at least at times in accordance with a piecewise continuous machining geometry.

4. A method according to any one of claims 1 to 3, **characterised in that** evaluation is carried out by the control unit of the manipulator.

5. A method according to any one of claims 1 to 4, **characterised in that** the machining geometry is discretised into a sequence of discrete coordinate values with uniform time spacing between successive values.

6. A method according to claim 5, **characterised in that** the coordinate values of the machining geometry are stored prior to machining in a memory unit associated with the control unit.

7. A method according to any one of claims 1 to 6, **characterised in that** the movement path of the manipulator is adapted to be as short and/or suitable for the components as possible.

8. A method according to any one of claims 1 to 7, **characterised in that** the individual coordinates of the movement path of the manipulator and, as a function thereof, a pose of the tool are determined in relation to the cycles of the coordinate values of the machining geometry.

9. A method according to any one of claims 5 to 8, **characterised in that** the movements of the manipulator and of the tool are determined between the cycles by interpolation.

10. A method according to any one of claims 5 to 9, **characterised in that** the cycle time is adapted at least at times to at least one parameter of the movements.

11. A method according to any one of claims 1 to 10, **characterised in that** movement of the tool tip takes place at a substantially constant speed.

12. A method according to any one of claims 1 to 11, **characterised in that** a predetermined movement path of the manipulator is stored prior to machining in the memory unit associated with the control unit.

13. A method according to any one of claims 1 to 12, **characterised in that** the workpiece is moved by the manipulator during machining.

14. A method according to any one of claims 1 to 13, **characterised in that** the tool is moved by the manipulator during machining.

15. A method according to any one of claims 1 to 14, **characterised in that** a control unit (3.7) of the tool receives signals from the control unit (2.3) of the manipulator (2) in real time via a transmission medium (2.8).

16. A method according to claim 9, **characterised in that** the tool is a laser machining tool and **in that** mirrors (3.2, 3.3) of the laser machining tool are advanced for control in a multiple of the interpolation cycle.

17. A device for machining workpieces (4), comprising a multiaxial manipulator (2) with a control unit (2.3) for movement control and a tool (3), which comprises a plurality of degrees of freedom (F₇-F₉) for carrying out self-movements, the tool (3) and its tool tip (TCP) being controllable in its movements (X, Y, Z) during machining of a workpiece (4) by the control unit (2.3) of the manipulator (2), **characterised in that**
- a movement envelope may be established which is determined by deviation values from a predetermined machining geometry, these being no greater than the maximum amplitudes of the corresponding self-movement of the tool,
- the movement path of the manipulator may be guided about the machining geometry within the movement envelope,
- desired movement values for the degrees of freedom of the tool may be determined by the difference between coordinates of the movement path of the manipulator and coordinates of the predetermined machining geometry, and
- machining positions may be achieved on the tool (4) by self-movements of the tool (3) synchronised with the movement of the manipulator (2).

18. A device according to claim 17, **characterised in that** the workpiece (4) is connected to the manipulator (2) during machining and may be moved thereby.

19. A device according to claim 17, **characterised in that** the tool (3) is connected to the manipulator (2) during machining and may be moved thereby.

20. A device according to any one of claims 17 to 19, **characterised by** a memory unit (2.4) associated with the control unit (2.3) of the manipulator (2) for storing at least one discretised sequence of coordinate values for a machining geometry (B) of the workpiece (4).

21. A device according to claim 20, **characterised by** a determination unit (2.5) for determining deviations (ΔB), for the coordinate values of the machining geometry (B), corresponding to amplitudes of the self-movements (X, Y, Z) of the tool (3).

22. A device according to claim 21, **characterised in that** signals generated in determination means (2.6) for dynamic determination of a relative pose between tool tip and a sum of the coordinate values of the machining geometry (B) and the associated deviations (ΔB) may be forwarded to the manipulator (2) and the tool (3) for the purpose of coordinated movement control.

23. A device according to any one of claims 17 to 22, **characterised by** software-based processor means (2.7) for timewise and/or spatial optimisation of an instantaneous movement (B') of the manipulator (2) using the degrees of freedom (X, Y, Z) of the tool (3).

24. A device according to any one of claims 17 to 23, **characterised in that** the tool (3) contains a control unit (3.7) which is designed to receive signals from the control unit (2.3) of the manipulator (2) in real time via a transmission medium (2.8).

25. A device according to any one of claims 17 to 24, **characterised in that** the self-movements of the tool (3) may be carried out at greater speed than the movements of the axes of the manipulator (2).

## Revendications

1. Procédé d'usinage de pièces (4) à l'aide d'un appareil de manutention (2) à plusieurs axes, tel qu'un robot industriel, avec un outil (3) déplacé de façon proportionnelle par une unité de commande (2.3) de l'appareil de manutention (2) et pouvant réaliser des mouvements propres avec plusieurs degrés de liberté (F₇-F₉), **caractérisé en ce que** :
un couloir de déplacement est calculé, ledit couloir étant déterminé par des valeurs de déviation par rapport à une géométrie d'usinage prédéfinie non supérieures aux amplitudes maximales du mouvement propre correspondant de l'outil ;
la trajectoire de déplacement de l'appareil de manutention à l'intérieur du couloir de déplacement est réalisée autour de la géométrie d'usinage ;
les valeurs théoriques de déplacement pour les degrés de liberté de l'outil sont déterminées par la différence des coordonnées de la trajectoire de déplacement de l'appareil de manutention et des coordonnées de la géométrie d'usinage préalablement prévue ;
les coordonnées de l'outil (3) dans ces degrés de liberté (F₇-F₉) sont analysées conjointement avec les coordonnées des axes de l'appareil de manutention (2) dans leurs degrés de liberté (F₁-F₆) en temps réel pour déplacer une pointe d'outil selon la géométrie d'usinage (J) prédéfinie et pour déterminer un déplacement de l'appareil de manutention (2); et
les positions d'usinage sont atteintes sur la pièce (4) à l'aide de mouvements propres de l'outil (3) synchrones avec le déplacement de l'appareil de manutention (2).

2. Procédé selon la revendication 1, **caractérisé en ce que** la pointe d'outil est déplacée au moins de façon périodique le long d'une géométrie d'usinage rattachée simplement.

3. Procédé selon la revendication 1 ou 2, **caractérisé en ce que** la pointe d'outil est déplacée au moins de façon périodique le long d'une géométrie d'usinage rattachée au moyen d'un raccord.

4. Procédé selon l'une quelconque des revendications 1 à 3, **caractérisé en ce que** l'analyse est réalisée par l'unité de commande de l'appareil de manutention.

5. Procédé selon l'une quelconque des revendications 1 à 4, **caractérisé en ce que** la géométrie d'usinage est calculée de façon discrète en prenant une succession de valeurs de coordonnées discrètes avec un écart égal dans le temps entre les valeurs successives.

6. Procédé selon la revendication 5, **caractérisé en ce que** les valeurs de coordonnées de la géométrie d'usinage sont mémorisées avant l'usinage dans une unité de mémorisation avec l'unité de commande associée.

7. Procédé selon l'une quelconque des revendications 1 à 6, **caractérisé en ce que** la trajectoire de déplacement de l'appareil de manutention est adaptée de façon à être la plus courte possible et/ou à être ajustée à ses éléments constitutifs.

8. Procédé selon l'une quelconque des revendications 1 à 7, **caractérisé en ce que** les différentes coordonnées de la trajectoire de déplacement de l'appareil de manutention et donc une pose de l'outil sont déterminées en fonction des cadences des valeurs de coordonnées de la géométrie d'usinage.

9. Procédé selon l'une quelconque des revendications 5 à 8, **caractérisé en ce que** les déplacements de l'appareil de manutention et de l'outil entre les cadences sont déterminés par interpolation.

10. Procédé selon l'une quelconque des revendications 5 à 9, **caractérisé en ce que** la cadence est adaptée au moins de façon périodique à au moins un paramètre des déplacements.

11. Procédé selon l'une quelconque des revendications 1 à 10, **caractérisé en ce que** le déplacement de la pointe d'outil se produit pour l'essentiel à vitesse constante.

12. Procédé selon l'une quelconque des revendications 1 à 11, **caractérisé en ce qu'**une trajectoire de déplacement prédéfinie de l'appareil de manutention est mémorisée avant l'usinage dans l'unité de mémorisation associée à l'unité de commande.

13. Procédé selon l'une quelconque des revendications 1 à 12, **caractérisé en ce que** la pièce est déplacée par l'appareil de manutention pendant l'usinage.

14. Procédé selon l'une quelconque des revendications 1 à 13, **caractérisé en ce que** l'outil est déplacé par l'appareil de manutention pendant l'usinage.

15. Procédé selon l'une quelconque des revendications 1 à 14, **caractérisé en ce qu'**une unité de commande (3.7) de l'outil reçoit en temps réel des signaux de l'unité de commande (2.3) de l'appareil de manutention (2) via un agent de transmission (2.8).

16. Procédé selon la revendication 9, **caractérisé en ce que** l'outil est un outil d'usinage laser est que les miroirs (3.2, 3.3) de l'outil d'usinage laser sont amenés par commande dans une pluralité de cadences d'interpolation.

17. Dispositif d'usinage de pièces (4), comportant un appareil de manutention (2) à plusieurs axes avec une unité de commande (2.3) pour la commande de déplacement et un outil (3) comportant, pour réaliser les mouvements propres, une pluralité de degrés de liberté (F₇-F₉), l'outil (3) et sa pointe d'outil (TCP) pouvant être commandés lors de l'usinage d'une pièce (4) dans leurs déplacements (X, Y, Z) par l'unité de commande (2.3) de l'appareil de manutention (2), **caractérisé en ce que** :
un couloir de déplacement est déterminé, ledit couloir étant déterminé au moyen de valeurs de déviation par rapport à une géométrie d'usinage prédéfinie ne devant pas dépasser les amplitudes maximales du mouvement propre correspondant de l'outil ;
la trajectoire de déplacement de l'appareil de manutention peut être guidée à l'intérieur du couloir de déplacement tout autour de la géométrie d'usinage ;
les valeurs théoriques de déplacement pour les degrés de liberté de l'outil peuvent être déterminées par la différence des coordonnées de la trajectoire de déplacement de l'appareil de manutention et des coordonnées de la géométrie d'usinage préalablement prévue ; et
les positions d'usinage sur l'outil (4) pouvant être atteintes à l'aide des mouvements propres de l'outil (3) synchronisés avec le déplacement de l'appareil de manutention (2).

18. Dispositif selon la revendication 17, **caractérisé en ce que** la pièce (4) est reliée à l'appareil de manutention (2) pendant l'usinage et peut être déplacée par lui.

19. Dispositif selon la revendication 17, **caractérisé en ce que** l'outil (3) est relié à l'appareil de manutention (2) pendant l'usinage et peut être déplacé par lui.

20. Dispositif selon l'une quelconque des revendications 17 à 19, **caractérisé par** une unité de mémorisation (2.4) avec l'unité de commande (2.3) associée à l'appareil de manutention (2) pour mémoriser au moins une succession discrète de valeurs de coordonnées pour une géométrie d'usinage (B) donnée de la pièce (4).

21. Dispositif selon la revendication 20, **caractérisé par** une unité de détermination (2.5) servant à déterminer les amplitudes des écarts (ΔB) correspondants des mouvements propres (X, Y, Z) de l'outil (3) pour les valeurs de coordonnées de la géométrie d'usinage (B).

22. Dispositif selon la revendication 21, **caractérisé en ce que** dans les moyens de détermination (2.6) servant à réaliser la détermination dynamique d'une pose relative entre la pointe d'outil et une somme des valeurs de coordonnées de la géométrie d'usinage (B), les signaux produits par les écarts (ΔB) correspondants peuvent être transmis en vue de la commande de déplacement coordonnée réalisée au niveau de l'appareil de manutention (2) et de l'outil (3).

23. Dispositif selon l'une quelconque des revendications 17 à 22, **caractérisé par** les moyens de processeur (2.7) entrant dans le domaine de la technique de la programmation afin d'optimiser dans le temps et/ou l'espace un déplacement (B') momentané de l'appareil de manutention (2) en utilisant les degrés de liberté (X, Y, Z) de l'outil (3).

24. Dispositif selon l'une quelconque des revendications 17 à 23, **caractérisé en ce que** l'outil (3) contient une unité de commande (3.7) réalisée pour recevoir en temps réel les signaux de l'unité de commande (2.3) de l'appareil de manutention (2) via un agent de transmission (2.8).

25. Dispositif selon l'une quelconque des revendications 17 à 24, **caractérisé en ce que** les mouvements propres de l'outil (3) peuvent être réalisés à plus grande vitesse que les déplacements des axes de l'appareil de manutention (2).
